# EUROPÄISCHE PATENTANMELDUNG

(11) **EP 1 180 636 A1**
(43) Veröffentlichungstag der Anmeldung: **20.02.2002**
(21) Anmeldenummer: 01111171.3
(22) Anmeldetag: 11.05.2001
(51) Int. Cl.: F16M 11/04

(54) **Justierbare Steckverbindung**

(30) Priorität: 11.08.2000 DE 10039278
(71) Anmelder: Rose Elektrotechnik GmbH & Co. KG, 32457 Porta Westfalica (DE)
(72) Erfinder: Schaadt, Dieter B., 32429 Minden (DE); Glenk, Ralf, 32602 Vlotho (DE)
(74) Vertreter: Philipp, Matthias, Dr.

(57) **Zusammenfassung**

Justierbare Steckverbindung (1) für ein Geräteträgersystem, mit einer insbesondere an einem Tragarm (5) oder einer Befestigungsfläche (3) festlegbaren Kupplung (2), die einen hohlen Aufnahmeabschnitt mit einer in Umfangsrichtung verlaufenden Wandung (9) aufweist, wobei ein mit einem Endabschnitt eines Tragarms (5) verbundenes oder verbindbares Steckfußelement (4) mit Spiel in den Aufnahmeabschnitt (8) einsetzbar und darin festlegbar ist, dadurch gekennzeichnet, daß in der Wandung (9) eine oder zwei Lagerschrauben (17) angeordnet sind, deren (gemeinsame) Wirkungslinie senkrecht zu einer Längsachse der Steckverbindung liegt und deren Spitze mit jeweils einer Zentrierung (18), insbesondere einem Sackloch, des Steckfußelements (4) zusammenwirkt, wobei axial versetzt und im Winkelabstand zu der Wirkungslinie der Lagerschrauben, insbesondere unter 90° dazu, in der Wandung (9) zwei gegeneinander gerichtete, von beiden Seiten auf das Steckfußelement (4) wirkende Justierschrauben (13) angeordnet sind, wobei die Lagerschraube(n) (17) in Zusammenwirken mit der Zentrierung eine schwenkende Justierbewegung des Steckfußelements (4) bzw. eines damit verbundenen Tragarms zulassen, deren Ausmaß im Rahmen des genannten Spiels durch die gegeneinander festzuziehenden Justierschrauben (13) einstellund festlegbar ist.

## Beschreibung

Die Erfindung betrifft eine justierbare Steckverbindung für ein Geräteträgersystem, mit einer insbesondere an einem Tragarm oder einer Befestigungsfläche festlegbaren Kupplung, die einen hohlen Aufnahmeabschnitt mit einer in Umfangsrichtung verlaufenden Wandung aufweist, wobei ein mit einem Endabschnitt eines Tragarms verbundenes oder verbindbares Steckfüßelement mit Spiel in den Aufnahmeabschnitt einsetzbar und darin festlegbar ist.

Eine derartige Steckverbindung ist aus dem DE-U-29905856 bekannt, das ein Gelenk für Geräteträgersysteme betrifft, wobei für die Ausrichtung bzw. Justierung eines Tragarms eine auf die gelenkseitige Stirnseite des Tragrohrs einwirkende Justierschraube und eine parallel dazu wirkende Sicherungsschraube vorgesehen sind.

Die Aufgabe der Erfindung besteht darin, eine in einfachster Weise einzustellende bzw. zu justierende Steckverbindung bereitzustellen, bei der die Befestigungsfunktion von der Einstell- bzw. Justierfunktion getrennt ist.

Diese Aufgabe wird erfindungsgemäß durch Anspruch 1 gelöst. Vorteilhafte Weiterbildungen der Erfindung sind in den Unteransprüchen aufgezeigt.

Die Erfindung wird nachfolgend anhand einer bevorzugten Ausführungsform erläutert, wobei auf eine Zeichnung Bezug genommen ist, in der
Fig. 1 eine auseinandergezogene perspektivische Ansicht einer erfindungsgemäßen Steckverbindung mit einer an einem Gehäuse befestigten Kupplung und einem mit einem Tragarm verbundenen Steckelement zeigt;
Fig. 2 eine perspektivische Ansicht der Steckverbindung nach Fig. 1 zeigt, wobei die Kupplung im Längsschnitt dargestellt ist;
Fig. 3 einen Längsschnitt durch eine erfindungsgemäße Steckverbindung in der Ebene der Lagerschrauben zeigt;
Fig. 4 einen Längsschnitt der erfindungsgemäßen Steckverbindung in der Ebene der Justierschrauben zeigt;
Fig. 4 einen Querschnitt durch einen Tragarm zeigt;
Fig. 6a bis 6c jeweils eine Seitenansicht der erfindungsgemäßen Steckverbindung mit im Längsschnitt entlang der Ebene der Justierschrauben dargestellter Kupplung zur Erläuterung des Montage- und Justiervorgangs zeigt; und
Fig. 7 eine Auslegeraufhängerung mit insgesamt vier erfindungsgemäßen Steckverbindungen zeigt.

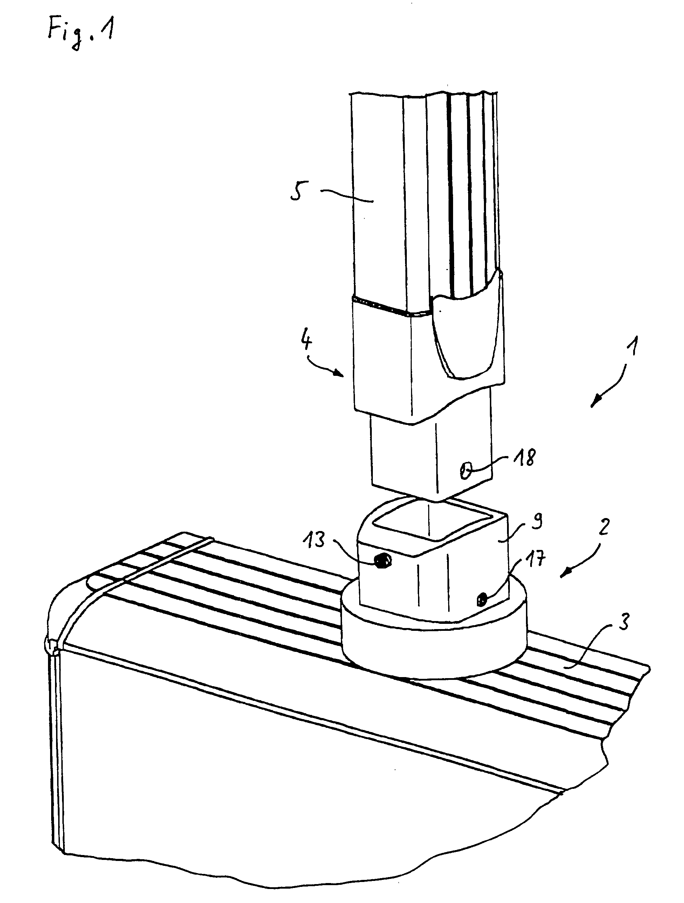

Fig. 1 zeigt eine im ganzen mit 1 bezeichnete, erfindungsgemäße Steckverbindung, wobei eine Kupplung 2 an einer Befestigungsfläche 3 eines in gewünschter Weise aufzuhängenden Steuergeräts o.ä. befestigt ist. Ein in die Kupplung 2 einzusetzendes Steckfußelement 4 ist mit einem Endabschnitt eines Tragarms 5 verbunden, der seinerseits unmittelbar oder über weitere Steckverbindungen (vgl. Fig. 7) in geeigneter Weise an einem Befestigungspunkt, bspw. an einer Wand, befestigt sein kann.

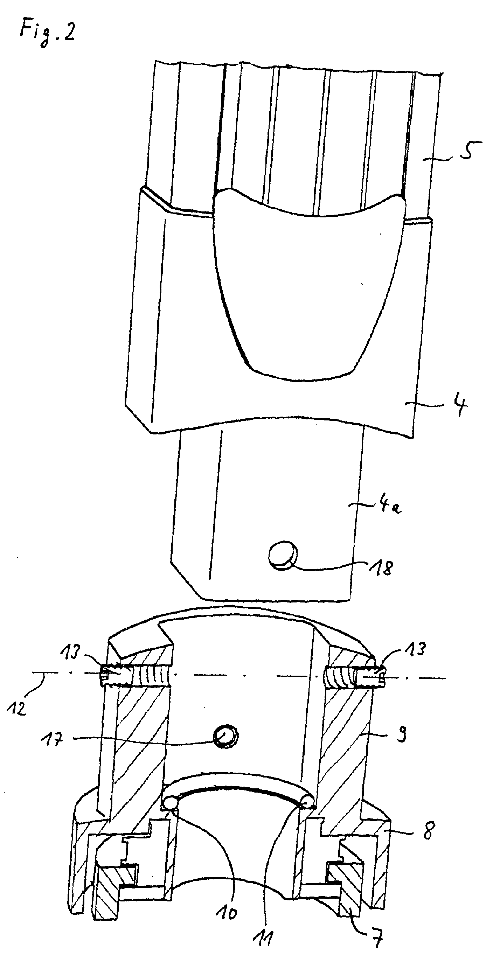

Wie Fig. 2 zeigt, beinhaltet die Kupplung 2 einen an der Befestigungsfläche 3 fixierten Kupplungssockel 7 und einen demgegenüber drehbaren Aufnahmeabschnitt 8. In seinem oberen Teil weist der Aufnahmeabschnitt 8 eine in Umfangsrichtung geschlossen verlaufende Wandung 9 auf, die in der Mitte einen rechteckigen Aufnahmequerschnitt für den Steckfuß 4a des Steckfüßelements 4 freiläßt. Im unteren Bereich der Wandung 9 ist eine runde oder ovale Auflageschulter 10 ausgebildet, auf der ein Elastomer-Dichtring bzw. O-Ring 11 aufliegt.

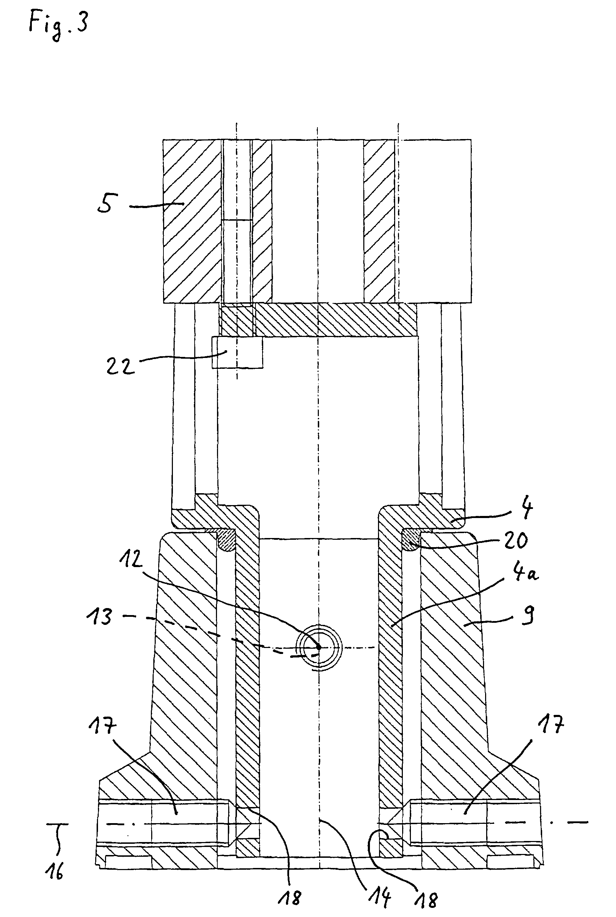

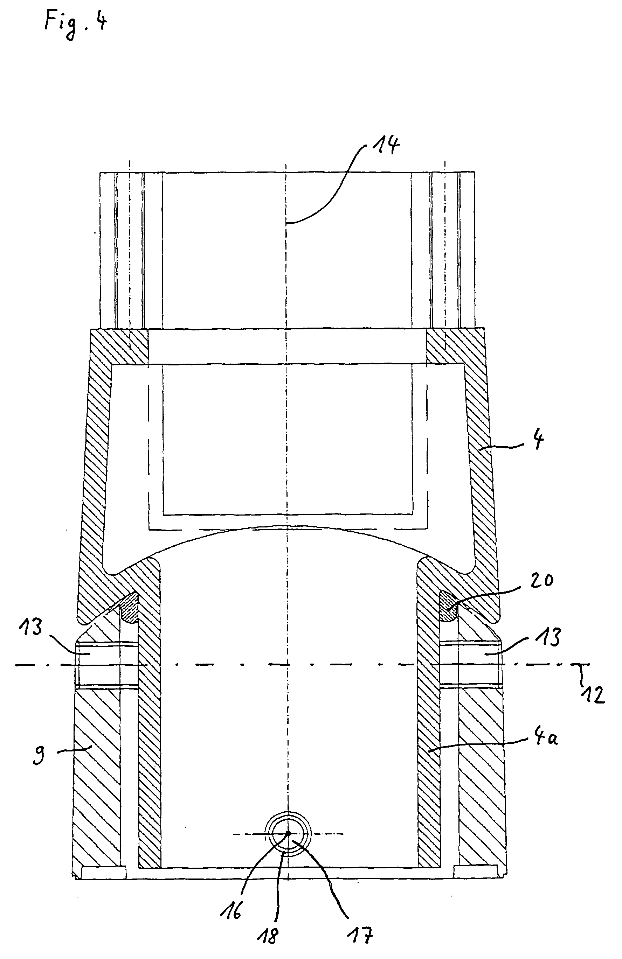

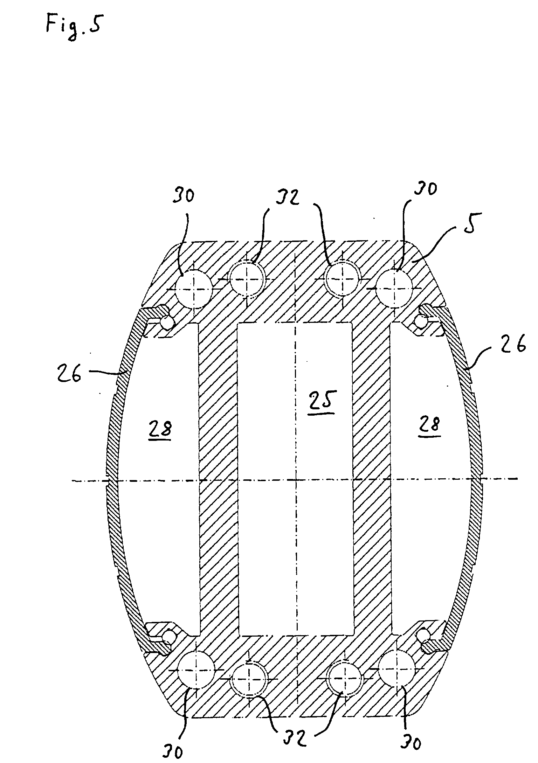

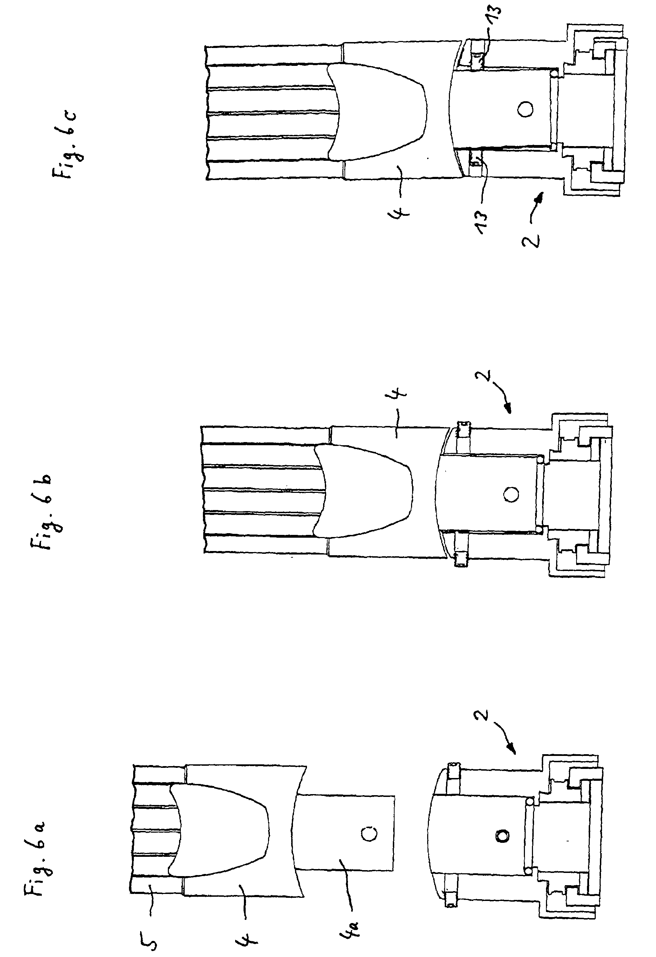

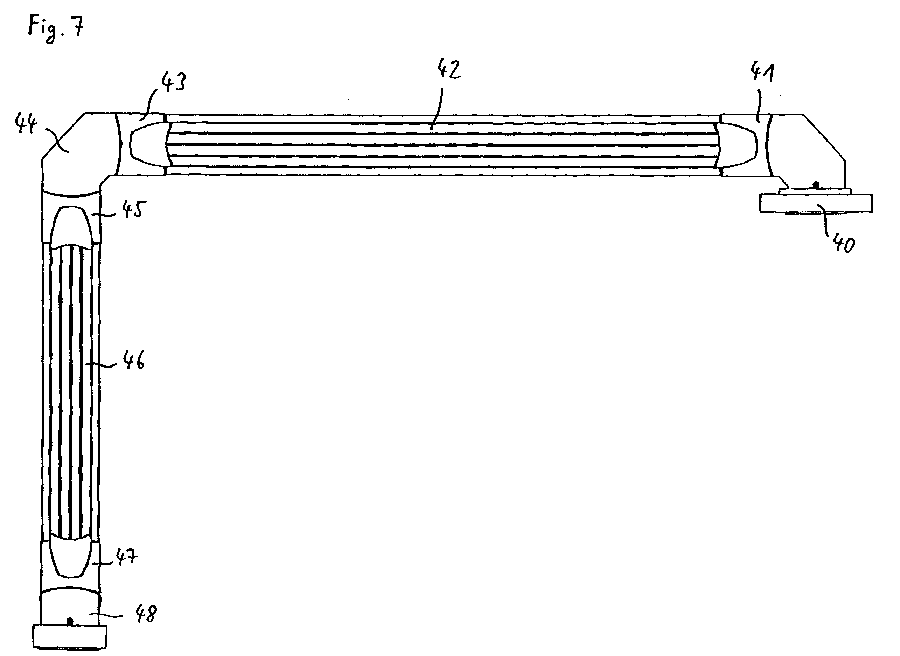

Im Bereich des freien Endabschnitts der Wandung 9 sind zwei entlang einer gemeinsamen Wirkungslinie 12 angeordnete Justierschrauben 13 vorgesehen. Unterhalb der Justierschrauben 13, d.h. in Richtung auf den Kupplungssockel sind in der Wandung 9 zwei ebenfalls entlang einer gemeinsamen Wirkungslinie 16 ausgerichtete Lagerschrauben 17 (siehe auch Fig. 3) angeordnet.

Wie insbesondere Fig. 3 und 4 deutlich zeigen, verlaufen die Wirkungslinien 12 und 16 jeweils senkrecht zueinander und senkrecht zu einer Längsachse 14 des Steckfußelements, wobei die Justierschrauben 13 von beiden Seiten gegen die schmaleren Außenflächen des im Querschnitt rechteckförmigen Steckfußes 4a wirken und die Lagerschrauben 17 mit einem konischen Kopf versehen sind und mit Bohrungen 18 zusammenwirken, die einander gegenüberliegend im unteren Bereich der breiteren Seitenwände des Steckfüßes 4a eingebracht sind.

Wie Fig. 3 und 4 weiter zeigen, ist zwischen den Außenflächen des Steckfußes 4a und den Innenflächen der Wandung 9 ein Zwischenraum, so daß in der zusammengesetzten Stellung mit beiderseits eingeschraubten Lagerschrauben 17 ein Spiel im Sinne einer Schwenkbeweglichkeit des Steckfußelements 4 um die Wirkungslinie 16 der Lagerschrauben 17 besteht. Mit anderen Worten bilden die Lagerschrauben 17 ein Schwenklager für das Steckfüßelement 4, wobei über die Justierschrauben 13 eine bestimmte Schwenkstellung des Steckfußelements 4 relativ zu der Kupplung 2 bzw. deren Wandung 9 einstell- und festlegbar ist (Fig. 4). Anstelle der einen kegelförmigen Kopf aufweisenden Madenschrauben 17 und der Durchgangsbohrungen 18 (oder alternativ Sacklöcher) könnte selbstverständlich ein beliebiges anderes Zentrierungs- bzw. Lagerungsmittel vorgesehen sein, mit dem erreicht wird, daß das Steckfußelement 4 um eine quer zu seiner Längsachse 14 ausgerichtete Schwenkachse um ein gewisses Maß schwenkbeweglich ist. Der Winkelverstellbereich des Steckfußelements 4 richtet sich nach den jeweiligen Anforderungen und beträgt im dargestellten Ausführungsbeispiel etwa 5° in beide Richtungen.

Wie Fig. 1 und 2 und insbesondere Fig. 4 deutlich zeigen, ist die Wandung 9 der Kupplung 2 in ihrem oberen, freien Endbereich zylinderförmig abgerundet, wobei der Zylinderradius dem Abstand des oberen Randes der Wandung von der "Schwenkachse" 16 entspricht. Das Steckfußelement 4 ist im Bereich eines Übergangsabschnitts ebenfalls zylindrisch gerundet, so daß sich bei einem Verschwenken zu Justierungszwecken stets ein kleinstmögliches Spaltmaß im Bereich des Übergangs zwischen Kupplung und Steckfüßelement ergibt. Zur Abdichtung ist in diesem Bereich auf der Innenseite ein Elastomer-Dichtring 20 angeordnet.

Aus Fig. 3 und 4 geht ferner die Befestigung des Tragarms 5 mittels Schrauben 22 an dem Steckfüßelement 4 hervor. Ergänzend hierzu zeigt Fig. 5 einen Querschnitt durch den Tragarm 5 im Bereich eines freien Endabschnitts, wobei ein zentraler Installationskanal 25 und zwei seitliche, durch einrastbare Abdeckleisten 26 verschlossene Installationskanäle 28 vorhanden sind. Vier Bohrungen 30 dienen zur Aufnahme von Bolzen zur Überleitung von Torsionskräften, während vier Gewindebohrungen 33 die genannten Befestigungsschrauben 22 aufnehmen.

Fig. 6a bis 6c erläutern Montage und Funktion der erfindungsgemäßen Steckverbindung. Zunächst wird ein Steckfußelement 4 stirnseitig gegen das Profil eines Tragarms 5 geschraubt, wobei die Verschraubung in der Endlage verdeckt ist. Das Gegenstück des Steckfüßelements 4, die Kupplung 2, kann vorbereitet an einem Steuergehäuse befestigt sein, so daß keine Montage an einem offenem Gehäuse bei Gefährdung der Einbauten erforderlich ist.

Anschließend wird das Steckfußelement 4 in die Ausnehmung der Kupplung 2 gesteckt (Fig. 6b), und die Lagerschrauben 17 werden in die Bohrungen 18 des Steckfußes 4a eingeschraubt. Dadurch wird bereits eine tragfähige Verbindung hergestellt.

Danach werden die seitlichen Justierschrauben 13 soweit eingeschraubt, daß die sich einstellende Winkelposition des Steckfußelements 4 relativ zu der Kupplung 2 dem jeweiligen Erfordernis entspricht (Fig. 6c).

Fig. 7 zeigt eine Auslegeraufhängung mit einer ersten, an einer Befestigungsfläche wie bspw. einer horizontalen Wand festlegbaren Kupplung 40, die einen um 90° gegenüber der Befestigungsfläche versetzten Aufnahmeabschnitt aufweist, mit einem daran über ein erstes Steckfußelement 41 befestigten, ersten Tragarm 42, der an seinem gegenüberliegenden Endabschnitt ein zweites Steckfüßelement 43 trägt. Das zweite Steckfußelement 43 sitzt in einem Winkelelement 44, das zwei unter 90° zueinander angeordnete Kupplungen bzw. Aufnahmeabschnitte für Steckfußelemente aufweist. Das Winkelelement 44 trägt über ein drittes Steckfüßelement 45 einen zweiten Tragarm 46, der an seinem gegenüberliegenden Ende mittels eines vierten Steckfüßelements 47 mit einer drehbaren Kupplung 48 verbunden ist, die ihrerseits zum Tragen eines Geräts wie Steuertafel, Steuergehäuse etc. bestimmt ist und an einer geeigneten Befestigungsfläche des Geräts fixierbar ist, so daß das Gerät durch die dargestellte Auslegeraufhängung in justierbarer Weise frei gehalten ist.

Die Auslegeraufhängung kann an jeder Steckverbindung zwischen einem Steckfußelement und einer Kupplung in der vorstehend beschriebenen Weise in Winkelrichtung justiert werden, wobei alternativ zu der dargestellten Anordnung, bei der sämtliche Justier-Schwenkbewegungen in der Darstellungsebene liegen, eine Anordnung denkbar ist, in der die "Schwenkachsen" 16 der einzelnen Steckverbindungen abwechselnd oder in beliebiger Anordnung zum Teil senkrecht zueinander verlaufen, so daß eine Justierung im Raum möglich ist.

### Bezugszeichenliste

- 1: Steckverbindung
- 2: Kupplung
- 3: Befestigungsfläche
- 4: Steckfüßelement
- 4a: Steckfuß
- 5: Tragarm
- 7: Kupplungssockel
- 8: Aufnahmeabschnit
- 9: Wandung
- 10: Auflageschulter
- 11: O-Ring
- 12: Wirkungslinie
- 13: Justierschraube
- 14: Längsachse
- 16: Wirkungslinie
- 17: Lagerschraube
- 18: Bohrung
- 20: Elastomer-Dichtring
- 22: Befestigungsschraube
- 25: Installationskanal
- 26: Abdeckleiste
- 28: Installationskanal
- 30: Bohrung
- 32: Gewindebohrung

## Patentansprüche

1. Justierbare Steckverbindung (1) für ein Geräteträgersystem, mit einer insbesondere an einem Tragarm (5) oder einer Befestigungsfläche (3) festlegbaren Kupplung (2), die einen hohlen Aufnahmeabschnitt mit einer in Umfangsrichtung verlaufenden Wandung (9) aufweist, wobei ein mit einem Endabschnitt eines Tragarms (5) verbundenes oder verbindbares Steckfüßelement (4) mit Spiel in den Aufnahmeabschnitt (8) einsetzbar und darin festlegbar ist, **dadurch gekennzeichnet, daß** in der Wandung (9) eine oder zwei Lagerschrauben (17) angeordnet sind, deren (gemeinsame) Wirkungslinie (16) senkrecht zu einer Längsachse (14) der Steckverbindung (1) liegt und deren Spitze mit jeweils einer Zentrierung (18), insbesondere einem Sackloch, des Steckfußelements (4) zusammenwirkt, wobei axial versetzt und im Winkelabstand zu der Wirkungslinie (16) der Lagerschrauben (17), insbesondere unter 90° dazu, in der Wandung (9) zwei gegeneinander gerichtete, von beiden Seiten auf das Steckfüßelement (4) wirkende Justierschrauben (13) angeordnet sind, wobei die Lagerschraube(n) (17) in Zusammenwirken mit der Zentrierung (18) eine schwenkende Justierbewegung des Steckfüßelements (4) bzw. eines damit verbundenen Tragarms (5) zulassen, deren Ausmaß im Rahmen des genannten Spiels durch die gegeneinander festzuziehenden Justierschrauben (13) einstell- und festlegbar ist.

2. Justierbare Steckverbindung nach Anspruch 1, **dadurch gekennzeichnet, daß** die Wandung (9) im Querschnitt im wesentlichen rechteckförmig mit zwei kürzeren und zwei längeren Seitenwänden ist.

3. Justierbare Steckverbindung nach Anspruch 2, **dadurch gekennzeichnet, daß** jeweils eine Lagerschraube (17) in einer längeren Seitenwand angeordnet ist.

4. Justierbare Steckverbindung nach Anspruch 2 oder 3, **dadurch gekennzeichnet, daß** jeweils eine Justierschraube (!3) in einer kürzeren Seitenwand angeordnet ist.

5. Justierbare Steckverbindung nach einem der vorangehenden Ansprüche, **dadurch gekennzeichnet, daß** die Lagerschraube(n) (17), bezogen auf den Einsetzzustand des Steckfußelements (4), näher an dessen freiem Endabschnitt angeordnet ist (sind) als die Justierschrauben (13).

6. Justierbare Steckverbindung nach einem der vorangehenden Ansprüche, **dadurch gekennzeichnet, daß** der freie Rand der Wandung (9) des Aufnahmeabschnitts (8) und ein an das Steckfüßelement anschließender, zur stirnseitigen Befestigung an einem Tragarm dienender Übergangsabschnitt zylindrisch abgerundet sind, wobei die Wirkungslinie (16) der Lagerschraube(n) (17) die Zylinderachse bildet.

7. Justierbare Steckverbindung nach Anspruch 6, **dadurch gekennzeichnet, daß** zwischen der abgerundeten Wandung des Aufnahmeabschnitts (8) und dem Übergangsabschnitt ein Elastomer-Dichtring (20) angeordnet ist.

8. Justierbare Steckverbindung nach einem der vorangehenden Ansprüche, **dadurch gekennzeichnet, daß** der mögliche Schwenk- bzw. Justierwinkel etwa 5° in beiden Richtungen beträgt.

9. Justierbare Steckverbindung nach einem der vorangehenden Ansprüche, **dadurch gekennzeichnet, daß** das Steckfüßelement (4) eine im Querschnitt rechteckförmige Wandung und mindestens einen axial durchgehenden Kanal aufweist.

10. Justierbare Steckverbindung nach einem der vorangehenden Ansprüche, **dadurch gekennzeichnet, daß** der Aufnahmeabschnitt (8) gegenüber einem an einem Tragarm (5) oder einer Befestigungsfläche (3) festlegbaren Kupplungssockel (7) drehbar ist.

11. Justierbare Steckverbindung nach Anspruch 10, **dadurch gekennzeichnet, daß** der Aufnahmeabschnitt (8) im Bereich des Kupplungssockels (7) eine runde Auflageschulter (10) aufweist, auf der ein Elastomer-Dichtring (11) angeordnet ist, mit dem die Stirnfläche des Steckfußelements (4) im eingesetzten Zustand abdichtend zusammenwirkt.

12. Auslegeraufhängung mit mindestens einer justierbaren Steckverbindung nach einem der vorangehenden Ansprüche und mindestens einem Tragarm (42, 46), zum Tragen einer Steuergeräts, einer Steuertafel od. dgl..

13. Auslegeraufhängung mit einer an einer Befestigungsfläche festlegbaren Kupplung (40), einem ersten Tragarm (42), einem Winkelelement (44), insbesondere 90°, mit zwei Kupplungen, einem zweiten Tragarm (46) und einer an einem Gehäuse eines Steuergeräts od. dgl. festlegbaren Kupplung (48).
